Europäisches Patentamt

European Patent Office

Office européen des brevets

(19)

(11) Numéro de publication : **0 096 634**
**B1**

# (12) FASCICULE DE BREVET EUROPÉEN

(45) Date de publication du fascicule du brevet :
25.03.87

(51) Int. Cl.⁴ : **B 25 J   9/00**

(21) Numéro de dépôt : 83401116.5

(22) Date de dépôt : 02.06.83

(54) **Robot industriel piloté par un automate programmable.**

(30) Priorité : 07.06.82 FR 8209992

(43) Date de publication de la demande :
21.12.83 Bulletin 83/51

(45) Mention de la délivrance du brevet :
25.03.87 Bulletin 87/13

(84) Etats contractants désignés :
BE CH DE GB IT LI NL SE

(56) Documents cités :
DE-A- 2 802 738
FR-A- 2 213 212
FR-A- 2 440 270
FR-A- 2 467 060

(73) Titulaire : **ALBORA S.A.**
**133 Avenue Léon Blum**
**F-38042 Grenoble (FR)**

(72) Inventeur : **Bonneton, Robert**
**11, Avenue Jean-Jaurès**
**F-38600 Fontaine (FR)**
Inventeur : **Chevaleyre, Robert**
**Lot. Les Iris - Le Versoud**
**F-38420 Domene (FR)**
Inventeur : **Joumard, Michel**
**19, Av. des Déportés du 11-11-43**
**F-38100 Grenoble (FR)**
Inventeur : **Manzon, Paul**
**23, rue du Dr. Calmette**
**F-38000 Grenoble (FR)**
Inventeur : **Poncet, Jean-Pierre**
**St. Nazaire-les-Eymes**
**F-38330 St. Ismier (FR)**

(74) Mandataire : **Kern, Paul et al**
**Merlin Gerin Sce. Brevets 20, rue Henri Tarze**
**F-38050 Grenoble Cedex (FR)**

## Description

L'invention concerne un robot industriel doté d'un manipulateur articulé à bras principal rotatif accouplé mécaniquement à un avant-bras solidaire de l'organe de préhension, et piloté par un automate programmable de commande et de contrôle du cycle de fonctionnement du robot.

Le document FR-A-2 440 270 décrit un robot industriel doté d'un manipulateur articulé ayant un système cinématique à bras principal rotatif accouplé mécaniquement à un avant-bras solidaire d'un organe de préhension, ledit système comprenant de plus :

une liaison à pivot du bras principal et de l'avant-bras comportant un premier axe vertical sur lequel sont montés lesdits bras et avant-bras,

un deuxième axe vertical de support du bras principal s'étendant parallèlement au premier axe de la laison à pivot tel que le bras principal et l'avant-bras se déplacent à pivotement autour de leurs axes respectifs dans un plan horizontal fixe pour former un système cinématique travaillant en coordonnées cylindriques,

un premier servo-moteur d'entraînement du bras principal,

un dispositif de transmission du mouvement du bras principal et de l'avant-bras, équipé d'un système à poulies et courroie s'étendant dans la direction du bras principal.

Ce dispositif de transmission comprend une poulie fixée sur l'axe de la liaison, une autre poulie solidaire de l'arbre entraîneur, et une courroie de liaison constituant un ensemble d'orientation de l'avant-bras. Le même servo-moteur sert à actionner le bras principal et l'avant-bras, et un mouvement de rotation du bras principal se traduit par une rotation simultanée et de même amplitude de l'organe de préhension lorsque ce dernier est solidaire de l'avant-bras. Un tel dispositif n'est pas applicable à un manipulateur ayant un organe préhenseur à déplacement linéaire parallèle au début du cycle de fonctionnement du robot. L'utilisation d'un pantographe auxiliaire permet d'éviter une telle rotation lorsque l'organe préhenseur doit être maintenu dans le plan de sa trajectoire. Ce pantographe est formé par un parallélogramme articulé ayant deux côtés courts et deux côtés longs, dont l'un des côtés courts porte un contrepoids, tandis que l'autre côté court est articulé autour d'un axe horizontal d'une articulation supplémentaire de l'organe préhenseur. L'ensemble du système cinématique du manipulateur est compliqué.

Il est déjà connu d'utiliser des robots dans l'industrie de transformation des plastiques pour effectuer diverses opérations de post-moulage et de déchargement. Les robots utilisés du type universel avec au moins six degrés de liberté sont performants, mais présentent néanmoins une structure cinématique et une commande compliquées dont le prix élevé intervient dans l'amortissement de l'investissement.

Les dispositifs classiques à manipulateurs utilisés dans l'industrie de transformation plastique, présentent les inconvénients suivants :

l'automatisme n'est pas total et nécessite par conséquent la présence d'un poste de travail sur la machine ;

inadaptation aux courtes séries (temps, réglage) ;

le conditionnement n'est possible que par l'adjonction de machines additionnelles ;

prévision d'organes d'adaptation spéciale pour les cas de trajectoires particulières de démoulage.

Le robot industriel selon l'invention se situe à un niveau intermédiaire entre les manipulateurs et les robots universels à six degrés de liberté ; il comprend un système fiable et de coût réduit, à trois axes, autorisant toutes les fonctions de démoulage et de post-moulage.

L'objet de l'invention consiste à réaliser un robot simplifié pour des opérations de post-moulage dans l'industrie de transformation des plastiques, et à autoriser le démoulage et l'extraction de la pièce moulée hors du moule à partir d'un point de prise et suivant une trajectoire linéaire faisant un angle donné par rapport au plan de démoulage.

Le manipulateur selon l'invention est caractérisé en ce que :

un premier moyen de transfert vertical, agencé entre l'organe préhenseur et l'extrémité libre de l'avant-bras, comporte un vérin pneumatique ou hydraulique ayant un piston à tige de commande, animé d'un mouvement de translation bidirectionnelle entre deux positions prédéterminées de fin de course situées à des niveaux haut et bas,

le bras principal et l'avant-bras sont montés sur le premier axe fou par l'intermédiaire de roulements,

un deuxième servo-moteur assure l'entraînement de l'avant-bras en rotation autour du premier axe,

une paire de premier et deuxième pignons du dispositif de transmission sont fixés à demeure aux extrémités opposées de l'axe fou de la liaison, pour coopérer avec une paire de première et deuxième courroies d'entraînement sans fin s'étendant respectivement dans la direction de l'avant-bras et du bras principal, la première courroie étant enroulée sur le premier pignon de la liaison et un troisième pignon solidaire du premier moyen de transfert vertical, et la deuxième courroie coopérant avec le deuxième pignon opposé de ladite liaison et un quatrième pignon monté coaxialement au deuxième axe,

des moyens de programmation des premier et deuxième servomoteurs pour coordonner les deux mouvements de rotation asservie du bras et de l'avant-bras, de manière à entraîner l'organe préhenseur selon une trajectoire linéaire au début du cycle de fonctionnement du robot.

Selon une caractéristique de l'invention, les quatre pignons du dispositif de transmission présentent des diamètres extérieurs sensiblement identiques, le quatrième pignon étant soit fixe, soit ajustable en rotation par rapport à la position relative du deuxième axe rotatif associé au bras principal. La longueur du bras principal est supérieure à celle de l'avant-bras et la course angulaire de l'axe support du bras principal est plus grande que celle de l'avant-bras autour de l'axe de la liaison, le système cinématique étant agencé pour que la trajectoire circulaire de la liaison à pivot lors de la course angulaire du bras soit située à l'intérieur du secteur annulaire de balayage des bras du système cinématique, ledit secteur étant délimité circonférentiellement par deux arcs de cercle concentriques centrés sur l'axe et constituant les trajectoires du moyen de transfert vertical pour les valeurs extrêmes de la course angulaire C de l'avant-bras.

Selon une autre caractéristique de l'invention, la tige du vérin est décentrée radialement par rapport à l'axe du piston, de manière à constituer un dispositif de guidage anti-rotation.

Un dispositif de liaison débrayable à mémoire est associé au porte-outil pour provoquer d'une part la désolidarisation momentanée de l'outil du porte-outil en cas d'apparition d'efforts anormaux, et d'autre part le rappel de l'outil vers sa position initiale de travail.

Selon une autre caractéristique le système de commande de chaque servomoteur comporte un capteur de position tout ou rien situé en un endroit prédéterminé de la course angulaire ou du bras correspondant, et un dispositif de recalage transitoire dudit bras vers une position initiale lors de la détection du premier index zéro vu après le changement d'état du capteur de position.

D'autres avantages et caractéristiques ressortiront plus clairement de l'exposé qui va suivre d'un mode de mise en œuvre de l'invention, donné à titre d'exemple non limitatif et représenté aux dessins annexés, dans lesquels :

la figure 1 est une vue schématique en perspective du robot industriel monté sur une presse à injection ;

la figure 2 montre une vue en perspective du manipulateur articulé du robot selon l'invention ;

la figure 3 est une vue partielle en perspective du robot selon la flèche P de la fig. 2 ;

les figures 4 et 5 représentent une vue schématique en plan du robot illustrant la coordination des mouvements de rotation des bras du manipulateur ;

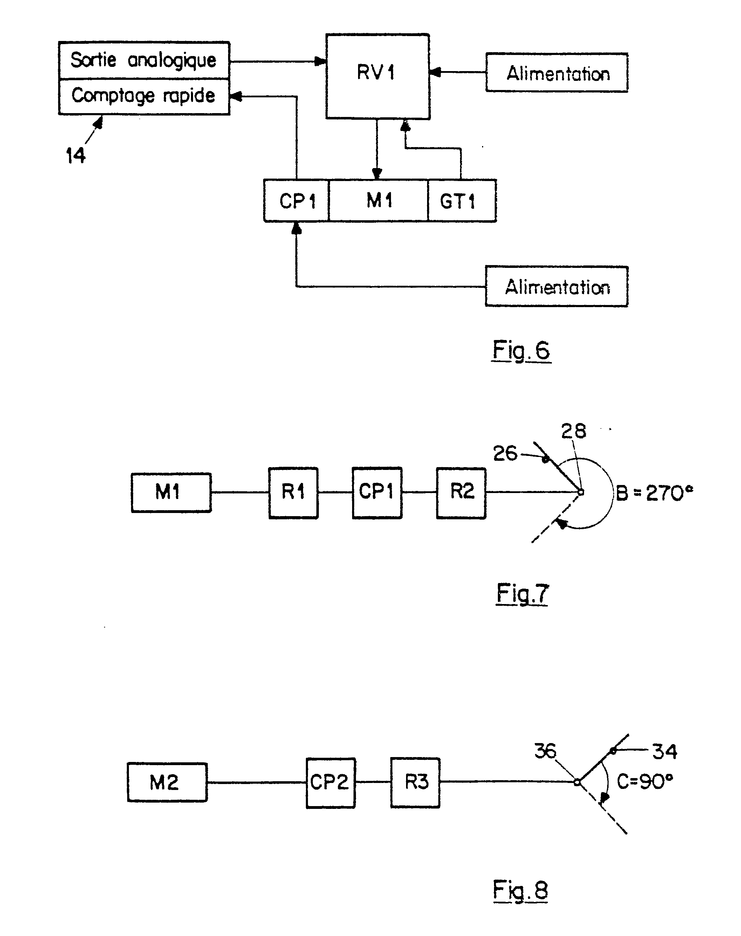

la figure 6 montre le schéma synoptique de commande de chaque servomoteur ;

les figures 7 et 8 représentent respectivement le schéma du système cinématique d'entraînement du bras principal et de l'avant-bras ;

la figure 9 est une vue en coupe de l'avant-bras et du vérin de transfert vertical, selon la ligne IX-IX de la fig. 2 ;

la figure 10 montre le dispositif de liaison débrayable à mémoire ;

la figure 11 représente le schéma électrique de raccordement du robot à l'automate programmable ;

les figures 12 et 13 montrent la disposition des capteurs de proximité au niveau de chaque articulation des bras ;

les figures 14 et 15 illustrent respectivement la cinématique et l'organigramme du cycle de recalage de chaque bras.

Sur les figures, un robot industriel 10, à commande séquentielle, comporte un manipulateur 12 articulé, à degrés de liberté multiples, utilisé dans l'industrie de transformation des plastiques pour des opérations de post-moulage. Le déroulement du cycle est piloté par un automate 14 programmable et débute par une opération de démoulage et d'extraction de la pièce moulée hors du moule à partir d'un point de prise 16. L'extraction s'effectue suivant une trajectoire linéaire de course prédéterminée faisant un angle A donné par rapport au plan P de démoulage. Le cycle se poursuit par une opération de transfert vers une zone de travail 18 où interviennent des opérations intermédiaires de la pièce moulée, notamment de perçage, d'ébavurage et de décarottage de la pièce moulée.

La palettisation s'opère ensuite dans une zone de dépose 20 située sur un convoyeur 22, la phase de déchargement se terminant lors du rangement de la pièce moulée sur une palette 24 de réception. Le robot 10 travaille en coordonnées cylindriques, l'extraction de la pièce hors du moule intervenant par un mouvement de translation limitée, suivi de mouvements de rotation pour le dégagement de la pièce.

Le système cinématique articulé du manipulateur 12 est solidaire du bâti 30 de la presse 32 et comporte un bras principal 26 monté à rotation sur un axe 28 support. A l'opposé de l'axe 28, le bras principal 26 est accouplé mécaniquement à un avant-bras 34 par une liaison à pivot 36 s'étendant parallèlement à l'axe support 28 dans un plan vertical perpendiculaire au bâti 30. Les deux bras 26, 34 du système articulé sont coplanaires et se déplacent par pivotement dans un plan horizontal fixe situé au-dessus du moule en balayant un secteur annulaire 38. La longueur du bras 26 est supérieure à celle de l'avant-bras 34.

A l'opposé de la liaison à pivot 36, l'avant-bras 34 porte un premier vérin 40 de transfert vertical dont la tige 42 de commande est accouplée à un porte outil 43 coopérant avec un outil de prise 44. L'outil de prise 44 comporte un organe préhenseur 45 formé par exemple par des ventouses d'agrippage de la pièce moulée. La tige 42 de commande du vérin 40 est animée d'un mouvement F de translation bidirectionnelle entre deux positions préréglées de fin de course situées à des niveaux différents haut et bas. Un deuxième vérin rotatif 46 de commande coopère avec l'organe préhenseur pour assurer le basculement vertical de l'outil de prise 44 autour d'un axe 48 horizontal du porte outil 43. Le débattement de l'outil de prise 44 correspond à celui d'un poignet articulé autour de l'axe 48 entre deux positions extrêmes décalées angulairement l'une de l'autre de 90 degrés. Les deux vérins 40, 46 sont actionnés par des moyens pneumatiques ou électriques commandés par l'automate programmable 14.

La course linéaire de démoulage est multidirectionnelle dans un plan horizontal et résulte de la coordination des deux mouvements coplanaires de rotation asservie du bras principal 26 et de l'avant-bras 34. La coordination est contrôlée par l'automate programmable 14 en fonction de la valeur affichée de l'angle A de démoulage. Cette valeur dépend des caractéristiques et paramètres intrinsèques du moule et de la pièce moulée, et est transcrite dans le programme du cycle de démoulage du robot.

Les mouvements de rotation du bras principal 26 et de l'avant-bras 34 sont engendrés par deux servomoteurs $M_1$, $M_2$ pilotés par l'automate programmable 14, chaque servomoteur étant associé à un régulateur analogique de vitesse $RV_1$ et $RV_2$ et à un codeur incrémental $CP_1$, $CP_2$ de position angulaire. La sortie analogique de l'automate 14 envoie un signal de consigne au régulateur $RV_1$, $RV_2$ de vitesse, qui élabore le signal d'alimentation du servomoteur $M_1$, $M_2$ en fonction de la vitesse mesurée par une génératrice tachymétrique $GT_1$, $GT_2$. Le signal de position angulaire du servomoteur $M_1$, $M_2$ est délivré par le codeur incrémental $CP_1$, $CP_2$ à un circuit de comptage rapide de l'automate 14. Il en résulte deux boucles d'asservissement en position et en vitesse pour chaque servomoteur $M_1$ et $M_2$.

L'arbre de commande du premier servomoteur $M_1$ est accouplé mécaniquement à un premier réducteur $R_1$ de transmission formé par deux pignons 50, 52 coopérant avec une courroie 54 crantée d'entraînement. Le grand pignon 52 du réducteur $R_1$ est relié cinématiquement par l'intermédiaire du codeur de position $CP_1$ à un deuxième réducteur $R_2$ mécanique à vis sans fin coopérant avec une roue d'entraînement. Le réducteur $R_2$ est logé dans un carter 55 fixe situé sous l'axe support 28 vertical de manière à entraîner en rotation l'axe 28 et le bras principal 26 du système articulé durant une course angulaire B variable dont l'amplitude maximum est de 270 degrés.

L'autre servomoteur $M_2$ associé au codeur de position $CP_2$, entraîne un troisième réducteur mécanique $R_3$ formé par une vis 56 de transmission à billes, dont la longueur variable par rotation du servomoteur $M_2$ provoque le pivotement de l'avant-bras 34 autour de la liaison à pivot 36. Le débattement angulaire C de l'avant-bras 34 autour du pivot 36 s'étend sur 90 degrés. Le servomoteur $M_2$ est supporté par deux pattes 60, 62 de fixation solidaires de l'axe 28 de rotation du bras principal 26. La vis de transmission 56 du réducteur $R_3$ s'étend parallèlement au bras principal 26 lors de la course angulaire B de l'axe 28 support.

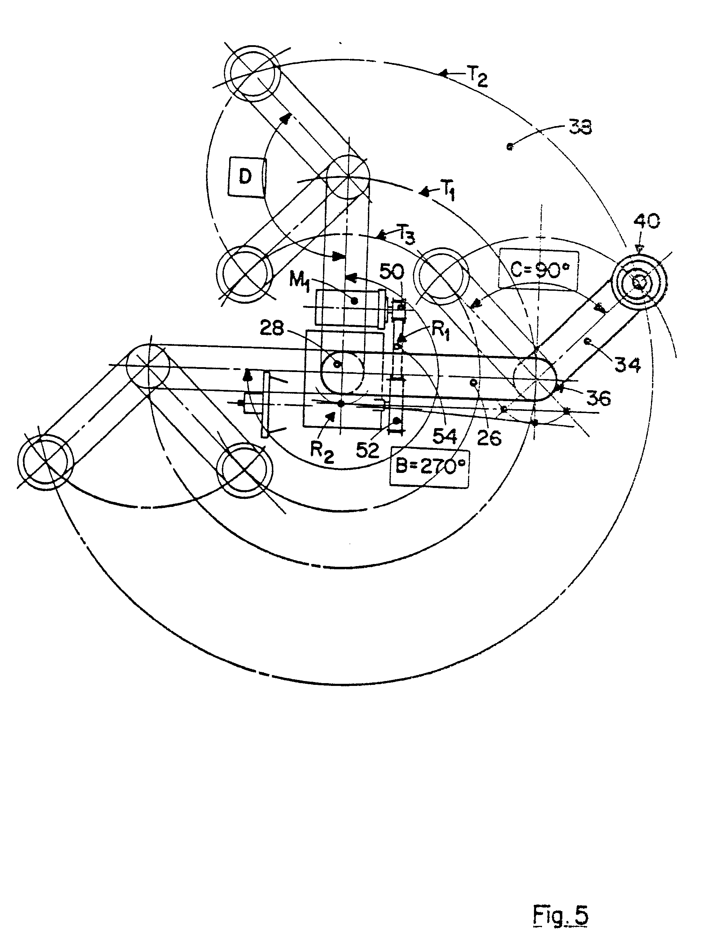

La liaison à pivot 36 du système articulé comporte un axe 64 fou sur lequel sont montés les bras 26, 34 par l'intermédiaire de roulements 66 à billes. Une paire de poulies ou pignons 68, 70 est fixée à demeure aux extrémités opposées de l'axe 64 fou vertical, le pignon inférieur 70 coopérant avec une courroie sans fin 72 montée sur un autre pignon 74 fixe assujetti au carter 55 du réducteur $R_2$. Le pignon supérieur 68 de l'axe 64 est relié d'une manière similaire par une courroie 76 de transmission à un pignon 78 fixé coaxialement autour du cylindre 80 du premier vérin 40 de transfert vertical. Les quatre pignons 74, 70 ; 68, 78 ont tous des diamètres extérieurs identiques, et un tendeur 82, 84 est associé à chaque courroie crantée 72, 76 pour assurer une tension mécanique appropriée. La position angulaire de l'avant-bras 34 par rapport au bras 26 est ainsi conservée durant le pivotement de l'axe 28 due à la rotation du premier servomoteur $M_1$, l'autre servomoteur $M_2$ étant inactif. On remarque sur la figure 5 qu'en position de repos du servomoteur $M_1$, l'angle D entre l'avant-bras 34 et le bras principal est susceptible de varier entre 45 et 135 degrés en fonction de l'angle de pivotement C de l'avant-bras 34 provoqué par la rotation du deuxième servomoteur $M_2$. La trajectoire $T_1$ circulaire de la liaison à pivot 36 lors de la course angulaire B du bras 26 est située à l'intérieur du secteur annulaire 38 de balayage du système articulé. Ce secteur 38 est délimité circonférentiellement par deux arcs de cercle $T_2$, $T_3$ concentriques centrés sur l'axe 28 et constituant les trajectoires du vérin 40 pour les valeurs extrêmes de l'angle C de l'avant-bras 34. Selon une variante (non représentée), le pignon 74 au lieu d'être fixe, peut être mobile en rotation.

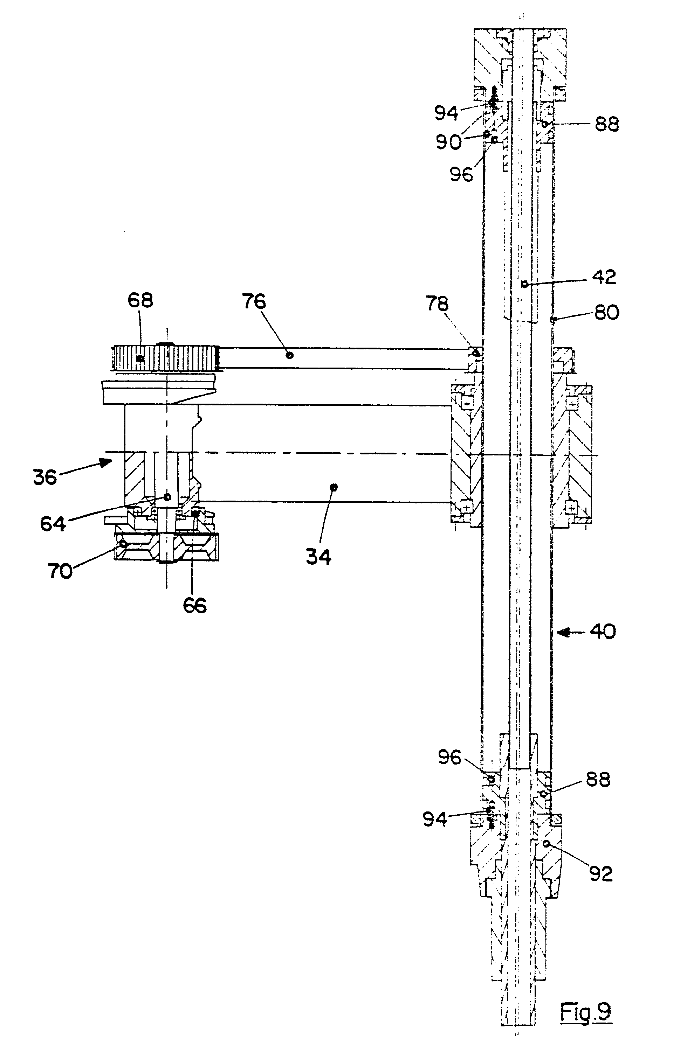

En référence à la figure 9, la tige de commande 42 du vérin 40 pneumatique de transfert vertical est mobile en translation entre deux positions de fin de course et est décentrée radialement par rapport à l'axe du piston 88 solidaire de la tige 42. Le piston 88 coulisse à étanchéité au moyen de joints 90 à l'intérieur du cylindre 80 fixé au corps 92. Le décentrement de la tige 42 constitue un dispositif de guidage anti-rotation, qui assure le maintien de la position relative entre le corps 92 et la tige 42 du vérin 40 lors des mouvements de rotation des bras 26, 34 du manipulateur 12. Le corps 92 du vérin 40 comporte au niveau de chaque fond des doigts 94 de centrage, coopérant par emboîtage en fin de course du vérin avec des encoches 96 ménagées dans le piston 88 mobile. L'insertion des doigts 94 dans les encoches 96 correspondantes complète le positionnement et le guidage en translation de la tige 42 en fin de course du vérin 40, de manière à soulager les joints 90 du piston 88 mobile. Le cylindre 80 fixe du vérin 40 est avantageusement réalisé en matière plastique.

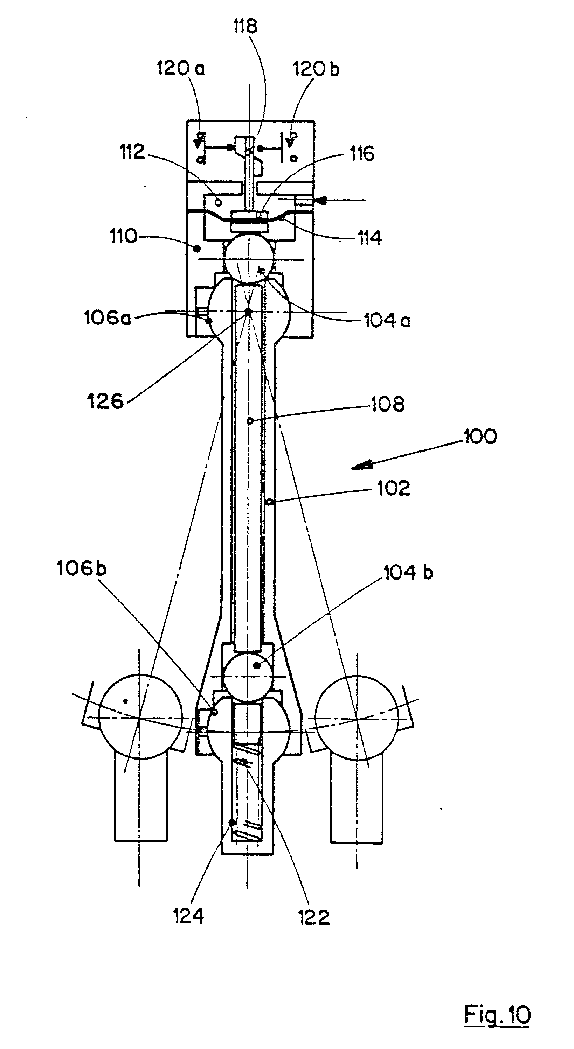

Au porte-outil 43 est associé un dispositif de liaison 100 débrayable à mémoire destiné à provoquer d'une part la désolidarisation momentanée de l'outil 44 du porte-outil 43 en cas d'apparition d'efforts anormaux et d'autre part le rappel automatique à la fin de l'opération de l'outil 44 vers sa position initiale de travail. Le dispositif de liaison 100, montré en détail à la figure 10, comporte un tube 102 de transmission dont l'une des extrémités solidaire du porte-outil 43 associé à la tige 42 est agencée en rotule 106a coopérant avec un premier verrou 104a. L'autre extrémité du tube 102 sert de logement à une deuxième rotule 106b

associée à un autre verrou 104b. Chaque verrou 104a, 104b est formé par une bille ou un rouleau de retenue susceptible de s'engager en position de blocage dans une cavité de la rotule correspondante. La structure de chaque rotule 106a, 106b présente deux degrés de liberté de rotation, l'un des degrés ayant été supprimé. Les liaisons à rotules 106a, 106b peuvent être avantageusement remplacées par des cardans. Une tige de commande 108 destinée au blocage de la deuxième rotule 106b et au déblocage de la première rotule 106a s'étend axialement à l'intérieur du tube de transmission 102 entre les deux verrous 104, 104b. L'ensemble rotule 106a associé au verrou 104a est logé dans un corps 110 fixe renfermant un volume 112 interne de commande du dispositif de liaison 100 débrayable. Dans l'exemple représenté, la commande de blocage est pneumatique et le volume 112 est subdivisé en deux espaces élémentaires par une paroi 114 souple dotée d'une rondelle 116 centrale. La face inférieure de la rondelle 116 d'actionnement se trouve en appui contre le verrou 104a à l'opposé de la tige 108, et la face supérieure est solidaire d'un transmetteur de position 118 coopérant avec deux jeux de contacts 120a, 120b, à commande inversée et en liaison électrique avec l'automate 14. Un ressort 122 de compression agencé dans une rainure 124 axiale du corps de la rotule 106b, sollicite le verrou 104b vers le haut à l'encontre de la force de blocage transmise par la tige 108. Au lieu d'être pneumatique, la commande de blocage est opérée de manière hydraulique ou mécanique.

Le fonctionnement du dispositif de liaison 100 débrayable est le suivant :

En position normale de verrouillage du dispositif 100, indiquée en traits forts sur la figure 10, le tube 102 de transmission occupe une position centrale d'équilibre dans laquelle la pression pneumatique à l'intérieur du volume 112 engendre une force verticale vers le bas sollicitant le premier verrou 104a en position de blocage dans la cavité de la rotule 106a. La force de blocage est transmise par la tige 108 au deuxième verrou 104b assurant le verrouillage de la rotule 106b inférieure. Les deux rotules 106a, 106b se trouvent en position bloquée, de manière à former une liaison rigide entre le porte-outil 43 et l'outil 44. Le jeu de contacts 120a est fermé et permet le déroulement du cycle commandé par l'automate 14.

Lors de l'apparition d'efforts anormaux susceptibles de détériorer le moule, le dispositif 100 se comporte en limiteur d'efforts en assurant le débrayage momentané de la liaison grâce au déverrouillage du verrou 104b, qui s'échappe légèrement de la cavité de la rotule 106b. La tige 108 transmet simultanément l'ordre de déblocage au premier verrou 104a, et les deux rotules 106a, 106b sont ainsi libérées. Le tube 102 est alors susceptible de pivoter autour du point 126, de manière à assurer la brisure de la liaison. L'application d'une force de rappel sur les verrous provoque le retour du dispositif 100 vers la position centrale d'équilibre.

Dans cette dernière position, le déverrouillage du dispositif 100 est opéré automatiquement après disparition de la pression pneumatique dans le volume 112 engendrant le déblocage des verrous 104a, 104b. L'effort antagoniste du ressort 122 maintient les rotules 106a, 106b, du dispositif 100 en position débloquée. La fermeture du jeu de contact 120b de sécurité peut être utilisée pour commander l'arrêt de l'automate 14.

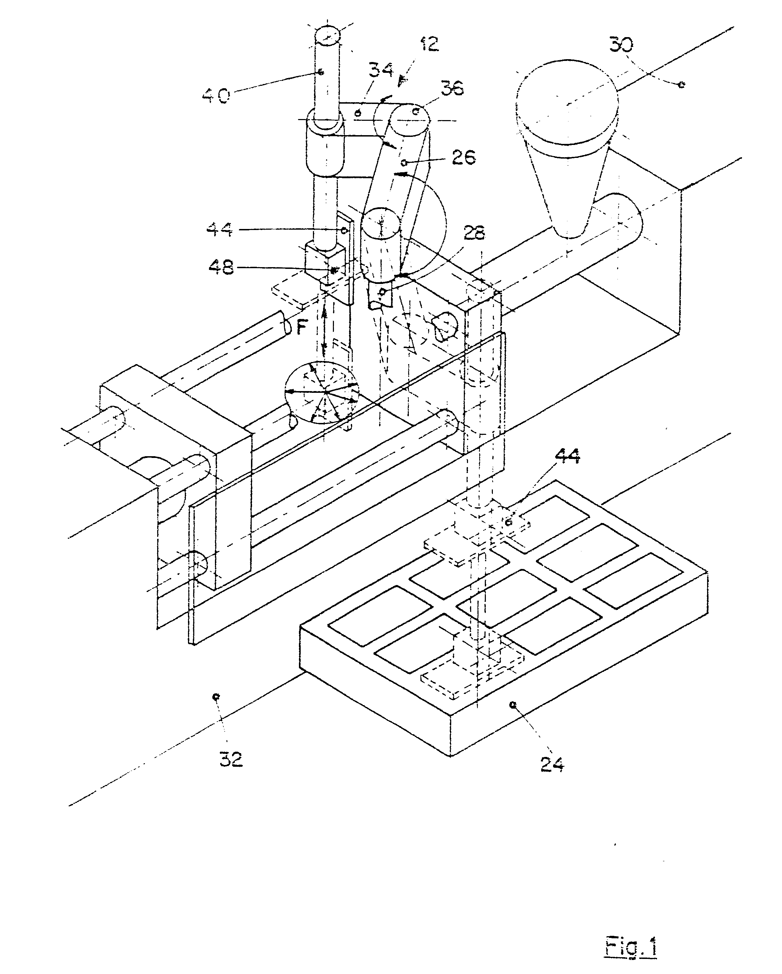

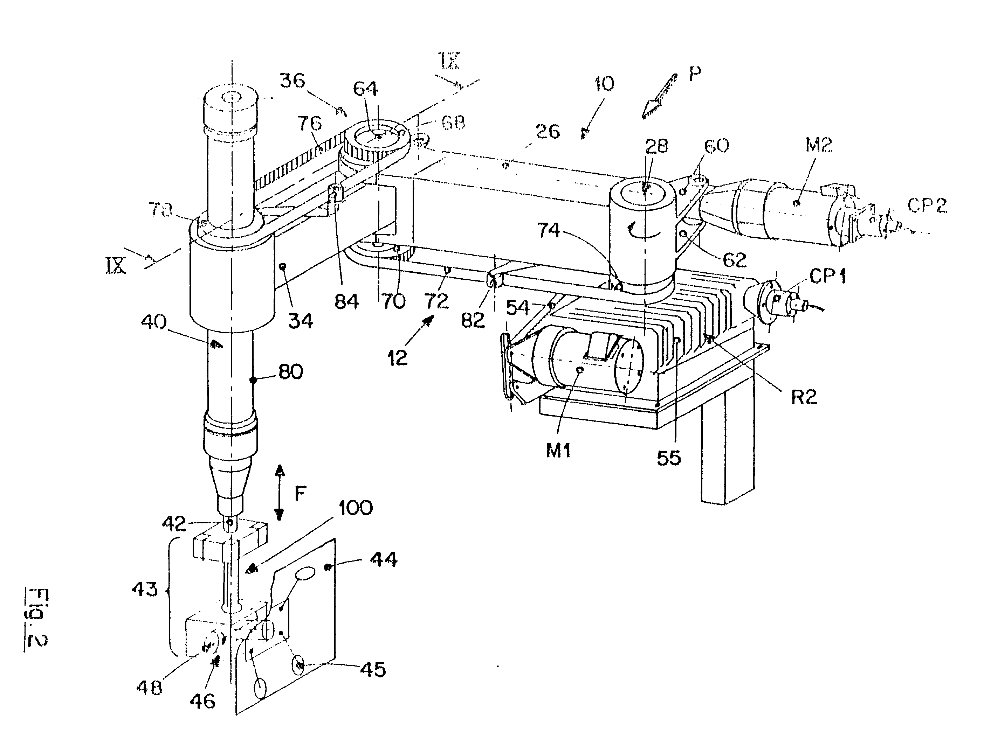

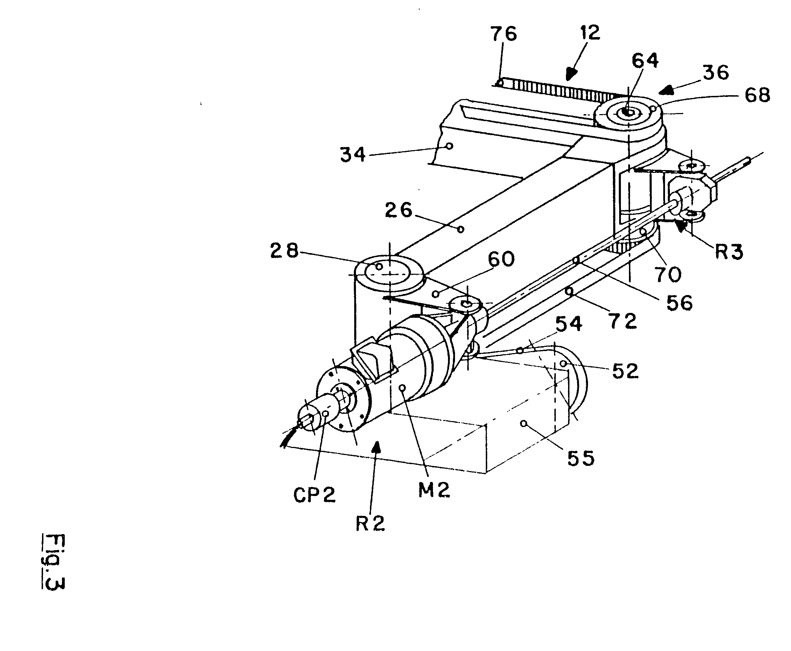

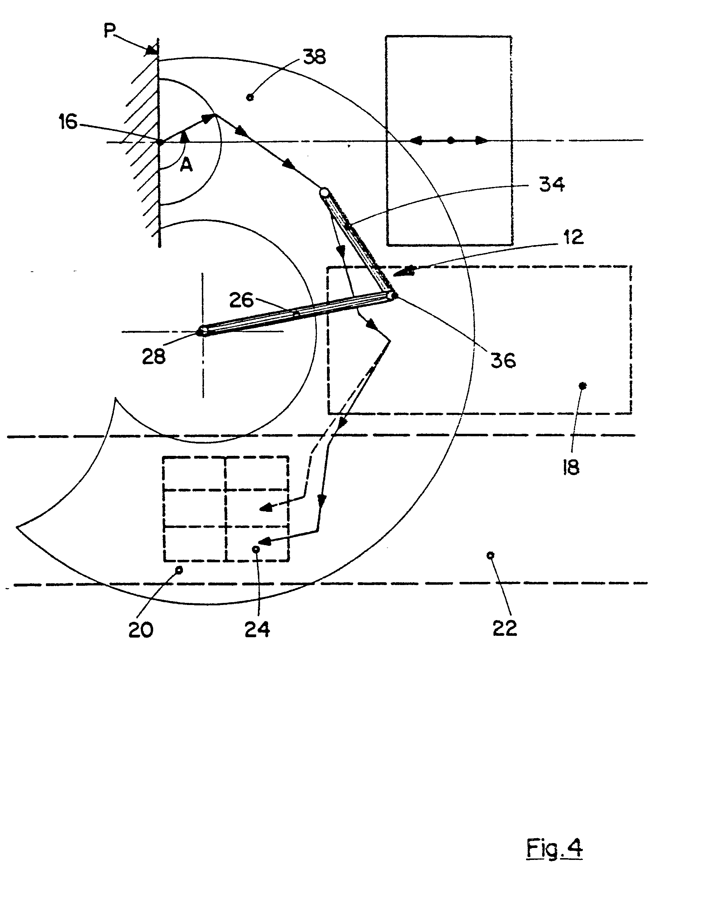

On ne décrira pas en détail toutes les opérations successives du cycle de fonctionnement du robot 10. Il suffit de remarquer sur les figures 1 et 4 que la trajectoire d'extraction lors du cycle de démoulage de la pièce moulée est linéaire durant une course de 150 mm dont le point d'origine correspond au point de prise 16. L'angle A formé par cette trajectoire avec le plan de démoulage est défini par une instruction donnée du programme de l'automate 14. La linéarité de la course de démoulage résulte de la coordination des deux mouvements de rotation asservie des bras 26, 34 du manipulateur 12. A la fin de la course d'extraction s'opère la montée de la pièce grâce à la translation verticale du vérin 40 vers la position haute. Après cette opération s'effectue le transfert de la pièce vers la zone intermédiaire de travail 18 (perçage, ébavurage et décarottage), la détermination de la trajectoire de transfert de l'organe terminal du robot étant obtenue par apprentissage grâce à la rotation asservie des bras 26, 34. Le cycle se poursuit ensuite par la phase de déchargement de la pièce grâce à une trajectoire de dépose optimisée et organisée en fonction des palettes 24 du convoyeur 22. Le deuxième vérin rotatif 46 de basculement provoque le pivotement de 90 degrés de l'outil 44 de prise lorsque le point de dépose est atteint, et la dépose de la pièce s'effectue finalement grâce à la descente du premier vérin 40 vers la position basse. A la fin de l'opération de déchargement s'opère la montée du premier vérin 40 vers la position haute suivi du retour direct du robot 10 vers le moule sans passage par la zone intermédiaire 18.

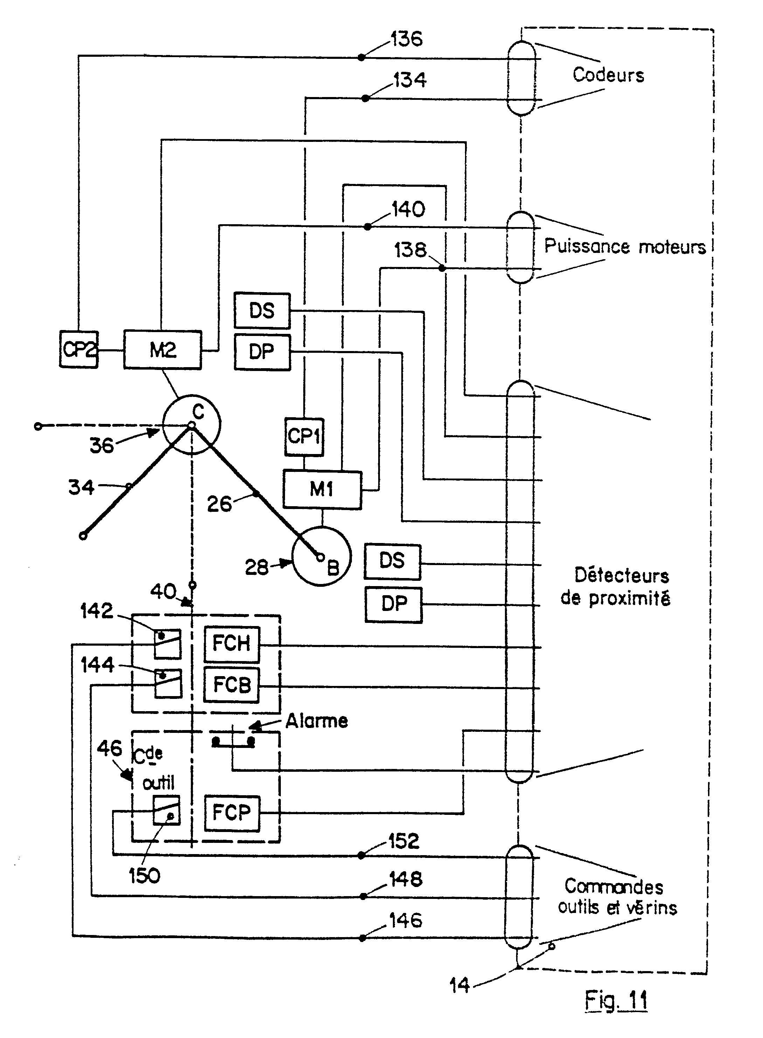

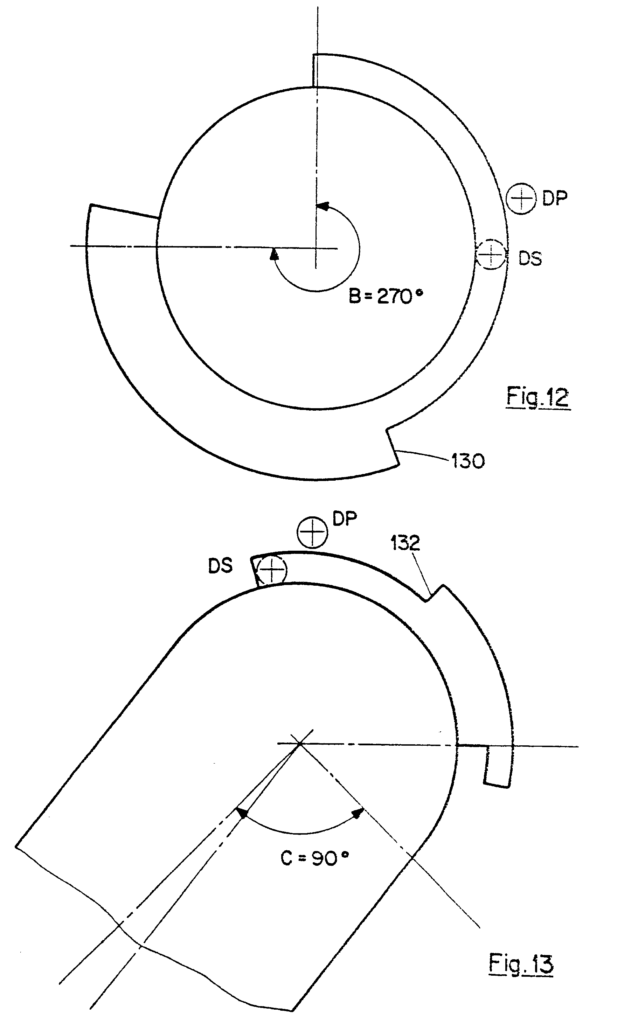

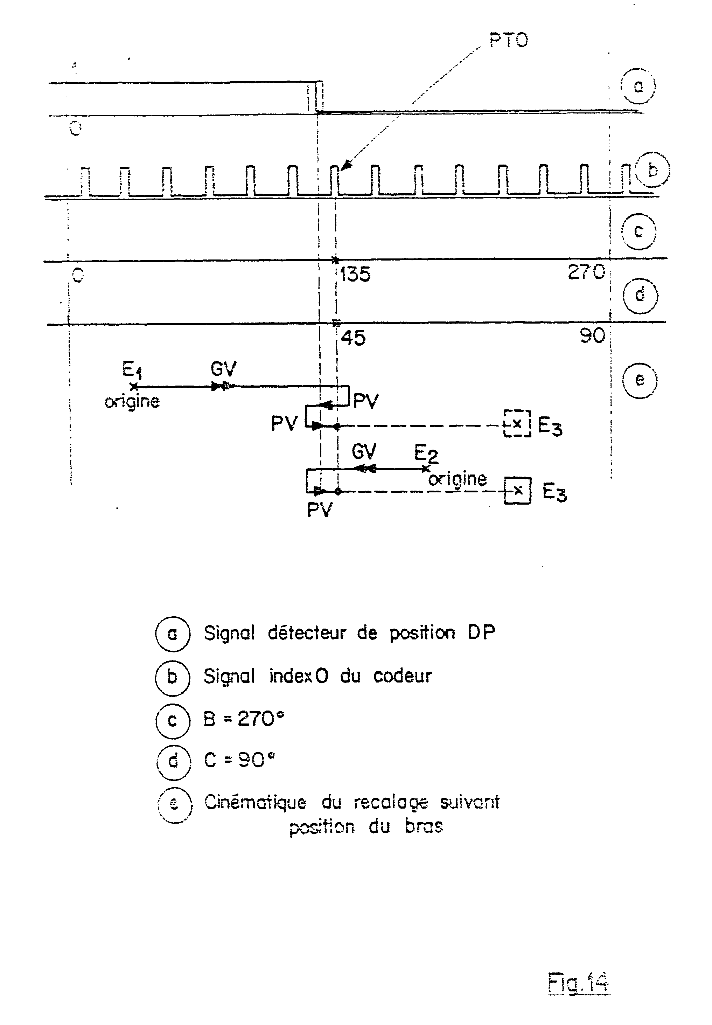

Sur la figure 11 illustrant le schéma électrique de raccordement du robot 10 aux entrées et sorties de l'automate programmable 14, l'articulation 28, 36 de chaque bras 26, 34, actionnés par les servomoteurs $M_1$, $M_2$ est équipée d'une paire de capteurs ou détecteurs DP et DS de positionnement et de sécurité du bras. Ces capteurs DP et DS sont formés à titre d'exemples par des éléments tout ou rien du type électromagnétique situés en un endroit prédéterminé de la course angulaire B, C du bras 26, 34 correspondant (voir figures 12 et 13). Lors de la rotation des servomoteurs $M_1$, $M_2$, le changement d'état des capteurs DP et DS est opéré par le passage d'un front 130, 132 d'un secteur métallique mobile qui se traduit par une ouverture ou une fermeture d'un contact électrique. Les deux codeurs $CP_1$ et $CP_2$ incrémentaux sont connectés à l'automate 14 par des conducteurs 134, 136, et les servomoteurs $M_1$, $M_2$ sont alimentés par des circuits puissance 138, 140. Le premier vérin 40 pneumatique de transfert vertical comporte une bobine 142 d'actionnement vers la position basse et une bobine 144 d'actionnement du vérin 40 vers la position haute, l'excitation desdites bobines étant pilotée par l'automate 14 au moyen de conducteurs 146, 148. Deux contacts FCH, FCB de fin de course haut et bas limitent la course de translation du vérin 40. La commande du deuxième vérin 46 pneumatique de basculement de l'outil 44 intervient par l'intermédiaire d'une bobine 150 excitée par l'automate 14 au moyen d'un conducteur 152. L'ensemble des détecteurs de position DP, de sécurité DS et les contacts de fin de course des vérins sont connectés à l'automate 14 par des conducteurs de liaison.

Un cycle transitoire de recalage initial des bras 26, 34 est opéré dans les cas suivants :

à la première mise sous tension du robot,

à la suite d'une coupure du secteur d'alimentation lors d'un déplacement rapide des bras,

lors d'un décalage accidentel détecté par le programme de contrôle.

Chaque codeur $CP_1$, $CP_2$ incrémental de la position angulaire des servomoteurs $M_1$, $M_2$ est bidirectionnel avec un index de passage à zéro dont le signal est représenté à la figure 14b. Chaque codeur incrémental $CP_1$, $CP_2$ délivre un signal index zéro ou signal top 0 à chaque tour du servomoteur $M_1$, $M_2$ correspondant. Le détecteur de position DP tout ou rien, associé à chaque articulation 28, 36 présente un changement d'état (fig. 14a) au voisinage du milieu de la course angulaire B, C du bras 26, 34 correspondant. L'état du détecteur de position DP indique à l'automate 14 si le bras 26 ou 34 est à gauche ou à droite de la position médiane. Lorsque la position d'origine du bras se trouve au point $E_1$ situé dans la zone de gauche (fig. 14e), le détecteur de position DP correspondant est à l'état 1. Le détecteur DP se trouve dans l'état 0 quand la position d'origine du bras est dans la zone de droite (par exemple au point $E_2$).

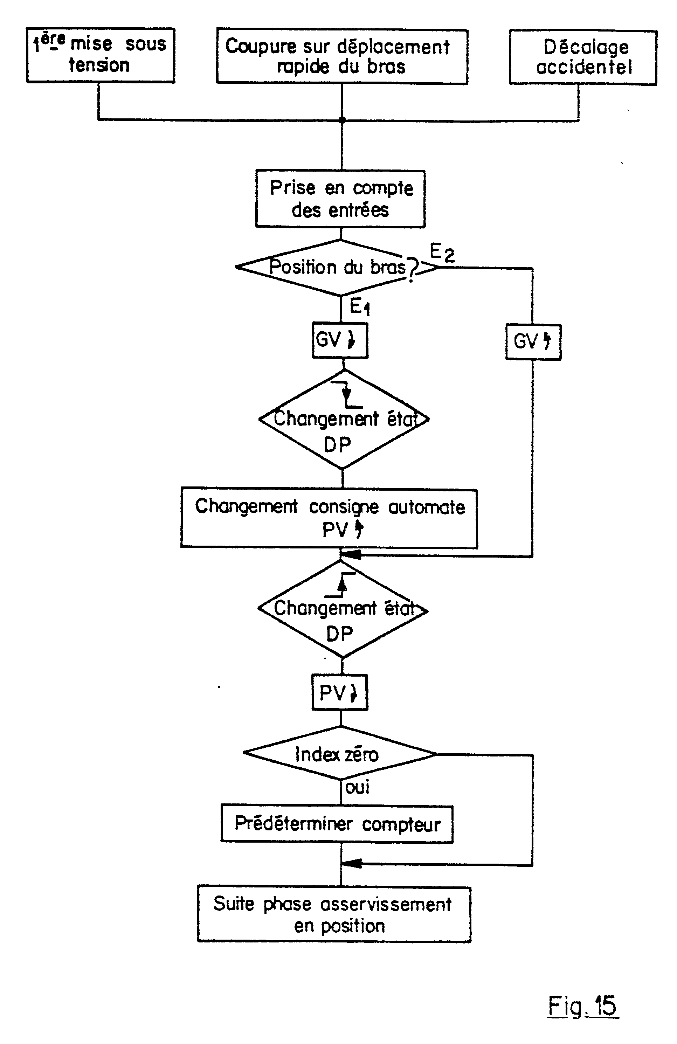

L'organigramme et la cinématique de recalage des bras sont représentés respectivement aux fig. 15 et 14e en fonction de la position d'origine des bras. L'organigramme est identique pour le bras principal 26 et l'avant-bras 34. Par la suite le fonctionnement sera décrit en référence au bras 26 actionné par le servomoteur $M_1$. Lorsque la position d'origine du bras 26 est à gauche (point $E_1$) la consigne de l'automate 14 réagit sur la boucle d'asservissement en vitesse, de manière à entraîner à grande vitesse (GV) le servomoteur $M_1$ dans un sens déterminé (par exemple celui des aiguilles d'une montre). Après changement d'état (1 à 0) du détecteur de position DP résultant du passage du front 130, se produit une modification de consigne de l'automate provoquant la rotation inverse à petite vitesse (PV) du servomoteur $M_1$ à partir d'une première position d'arrêt située dans la zone de droite au voisinage de la position médiane. Cette première position d'arrêt dépend de l'inertie du bras, et le mouvement de rotation inverse (PV) dure jusqu'au changement d'état (0 à 1) du détecteur DP. Une deuxième position d'arrêt est alors atteinte dans la zone de gauche proche de la position médiane, suivi d'un nouveau changement de consigne de l'automate qui entraîne l'inversion du sens de rotation du servomoteur $M_1$ pour déterminer l'index zéro du codeur incrémental $CP_1$. La recherche du premier top zéro après le changement d'état du détecteur DP s'effectue en petite vitesse (PV) toujours dans le même sens de déplacement (aiguilles d'une montre) indépendamment de la position d'origine ($E_1$ ou $E_2$) du bras 26. Ce top zéro correspond à une position mécanique précise du servomoteur $M_1$. Lorsque la position d'origine du bras 26 est à droite (point $E_2$), l'état 0 du détecteur de position DP réagit avec la boucle d'asservissement en vitesse de l'automate pour provoquer la rotation dans le sens trigonométrique du servomoteur $M_1$ entraîné à grande vitesse (GV) jusqu'à une position d'arrêt située dans la zone de gauche au voisinage de la position médiane. Le changement d'état (0 à 1) du détecteur de position DP assure ensuite une modification de la consigne de l'automate et l'inversion du sens de rotation (à PV) du servomoteur $M_1$ pour la recherche du top zéro.

Indépendamment de la position d'origine du bras 26, le détecteur de position DP précise la zone de la position d'origine du bras (à gauche ou à droite), et le compteur image de la position est ensuite prédéterminé sur le premier top zéro (PTO) vu après le changement d'état du détecteur de position DP. Cette séquence de recalage initiale est transitoire et est immédiatement suivie de la phase d'asservissement en position (prise de position par incrément jusqu'au point de consigne $E_3$).

## Revendications

1. Robot industriel (10) doté d'un manipulateur (12) articulé ayant un bras principal (26) rotatif accouplé mécaniquement à un avant-bras (34) solidaire de l'organe de préhension (45), et piloté par un automate (14) programmable de commande du cycle de fonctionnement du robot, le système cinématique du manipulateur (12) comprenant :

une liaison à pivot (36) du bras principal (26) et de l'avant-bras (34) comportant un premier axe (64) vertical sur lequel sont montés lesdits bras et avant-bras,

un deuxième axe (28) vertical de support du bras principal (26) s'étendant parallèlement au premier axe (64) de la liaison à pivot (36) tel que le bras principal (26) et l'avant-bras (34) se déplacent à pivotement autour de leurs axes respectifs (28, 64) dans un plan horizontal fixe pour former un système cinématique travaillant en coordonnées cylindriques,

un premier servo-moteur (M1) d'entraînement du bras principal,

un dispositif de transmission du mouvement du bras principal (26) et de l'avant-bras (34), équipé d'un système à poulies et courroie s'étendant dans la direction du bras principal, ledit robot étant caractérisé en ce que :

un premier moyen de transfert vertical, agencé entre l'organe préhenseur (45) et l'extrémité libre de l'avant-bras (34), comporte un vérin (40) pneumatique ou hydraulique ayant un piston (88) à tige de commande (42), animé d'un mouvement F de translation bidirectionnelle entre deux positions prédéterminées de fin de course situées à des niveaux haut et bas,

le bras principal (26) et l'avant-bras (34) sont montés sur le premier axe (64) fou par l'intermédiaire de roulements (66),

un deuxième servo-moteur (M2) assure l'entraînement de l'avant-bras (34) en rotation autour du premier axe (64),

une paire de premier et deuxième pignons (68, 70) du dispositif de transmission sont fixés à demeure aux extrémités opposées de l'axe (64) fou de la liaison (36), pour coopérer avec une paire de première et deuxième courroies (76, 72) d'entraînement sans fin s'étendant respectivement dans la direction de l'avant-bras (34) et du bras principal (26), la première courroie (76) étant enroulée sur le premier pignon (68) de la liaison (36) et un troisième pignon (78) solidaire du premier moyen de transfert vertical, et la deuxième courroie (72) coopérant avec le deuxième pignon (70) opposé de ladite liaison (36) et un quatrième pignon (74) monté coaxialement au deuxième axe (28),

des moyens de programmation des premier et deuxième servomoteurs (M1, M2) pour coordonner les deux mouvements de rotation asservie du bras (26) et de l'avant-bras (34), de manière à entraîner l'organe préhenseur (45) selon une trajectoire linéaire au début du cycle de fonctionnement du robot.

2. Robot industriel selon la revendication 1, caractérisé en ce que les quatre pignons (78, 68, 70, 74) du dispositif de transmission présentent des diamètres extérieurs sensiblement identiques, et que le quatrième pignon (74) est soit fixe, soit ajustable en rotation par rapport à la position relative du deuxième axe (28) rotatif associé au bras principal (26).

3. Robot industriel selon la revendication 1 ou 2, caractérisé en ce que la longueur du bras principal (26) est supérieure à celle de l'avant-bras (34), et que la course angulaire B du deuxième axe (28) du bras principal (26) est plus grande que celle C de l'avant-bras (34) autour de l'axe (64) de la liaison (36), le système cinématique étant agencé pour que la trajectoire T1 circulaire de la liaison à pivot (36) lors de la course angulaire B du bras principal (26) soit située à l'intérieur du secteur annulaire (38) de balayage des bras du système cinématique, ledit secteur (38) étant délimité circonférentiellement par deux arcs de cercle T2, T3 concentriques centrés sur le deuxième axe (28) et constituant les trajectoires du moyen de transfert vertical pour les valeurs extrêmes de la course angulaire C de l'avant-bras (34).

4. Robot industriel selon l'une des revendications 1 à 3, caractérisé en ce que le deuxième servomoteur (M2) assure le pivotement de l'avant-bras (34) par l'intermédiaire d'un réducteur mécanique R3 formé par une vis de transmission (56) à billes s'étendant parallèlement au bras principal (26) lors de la rotation du deuxième axe (28), le servo-moteur (M2) étant supporté par au moins une patte de fixation (60, 62) solidaire du deuxième axe (28).

5. Robot industriel selon l'une des revendications 1 à 4, caractérisé en ce que la tige (42) de commande du vérin (40) est décentrée radialement par rapport à l'axe du piston (88) de manière à constituer un dispositif de guidage anti-rotation.

6. Robot industriel selon la revendication 5, caractérisé en ce que la tige (42) du premier vérin (40) est accouplée mécaniquement à un porte-outil (43) de l'organe préhenseur (45), et qu'un deuxième vérin (46) assure le basculement vertical de l'organe préhenseur (45) autour d'un axe (48) horizontal du porte-outil (43).

7. Robot industriel selon la revendication 6, caractérisé en ce qu'un dispositif de liaison (100) débrayable à mémoire est associé au porte-outil (43) pour provoquer d'une part la désolidarisation momentanée de l'outil (44) du porte-outil (43) en cas d'apparition d'efforts anormaux, et d'autre part le rappel de l'outil (44) vers sa position initiale de travail.

8. Robot industriel selon la revendication 7, caractérisé en ce que le dispositif de liaison (100) débrayable comporte

un tube (102) de transmission dont l'une des extrémités est agencée en rotule (106a) coopérant avec un premier verrou (104a) et dont l'autre extrémité sert de logement à une deuxième rotule (106b) associée à un autre verrou (104b), chaque verrou (104a, 104b) étant formé par une bille ou un rouleau de verrouillage susceptible de s'engager en position de blocage du dispositif dans une cavité de la rotule correspondante,

et une tige (108) de commande s'étendant axialement à l'intérieur du tube (102) entre les deux verrous (104a, 104b) pour assurer alternativement le blocage de la deuxième rotule (106b) et le déblocage de la première rotule (106a).

9. Robot industriel selon l'une quelconque des revendications 1 à 8 précédentes, chaque servo-moteur $M_1$, $M_2$ d'entraînement des bras (26, 34) étant piloté par le système de commande séquentielle de l'automate grâce à un codeur $CP_1$, $CP_2$ incrémental de position angulaire ayant un index de passage à zéro, et à un régulateur analogique de vitesse $RV_1$, $RV_2$, formant deux boucles d'asservissement en position et en vitesse, caractérisé en ce que ledit système de commande de chaque servomoteur $M_1$ ou $M_2$ comporte un capteur de position DP tout ou rien situé en un endroit prédéterminé de la course angulaire B ou C du bras principal (26) et de l'avant-bras (34), et un dispositif de recalage transitoire dudit bras (26, 34) vers une position initiale lors de la détection du premier index zéro PTO vu après le changement d'état du capteur de position DP.

10. Robot industriel selon la revendication 9, caractérisé en ce que le dispositif de recalage transitoire de chaque bras (26, 34) comporte des moyens de prise en compte des entrées, un moyen pour détecter l'état du capteur de position DP tout ou rien pour la localisation de la position d'origine du bras, des moyens pour afficher une consigne à la boucle d'asservissement en vitesse du système de commande de l'automate, des moyens pour choisir le sens de rotation du servomoteur bidirectionnel en fonction de l'état du capteur DP, des moyens pour détecter le changement d'état du capteur lors de la rotation du servomoteur, des moyens pour modifier la consigne de la boucle d'asservissement en vitesse après ledit changement d'état, des moyens pour déterminer le premier index zéro du codeur incrémental, délivré après le changement d'état du capteur pour un sens déterminé de rotation du servomoteur indépendamment de la position d'origine du bras, et des moyens pour prédéterminer le compteur de l'automate après détection de l'index zéro.

## Claims

1. Industrial robot (10) equipped with an articulated manipulator (12) having a main rotating arm (26) coupled mechanically to a forearm (34) attached to the gripping component (45), and controlled by a programmable controller (14) directing and monitoring the robot's operating cycle, presenting the particular feature that the kinematic system of the manipulator (12) comprises :

a swivel link (36) between main arm (26) and forearm (34) comprising a vertical first spindle (64) onto which said main arm and forearm are mounted,

a second vertical spindle (28) supporting main arm (26) lying parallel to loose spindle (64) of swivel link (36) in such a way that both arms (26, 34) pivot about their respective spindles (28, 64) in a fixed horizontal plane to constitute a kinematic system functioning in cylindrical coordinates,

a first servo-motor (M1) driving main arm (26),

a device to transmit the movement of main arm (26) and forearm (34), equipped with a system of gear-wheels and drive belts lying in the direction of the main arm, said robot being characterized by the fact that :

a first means of vertical transfer, provided between the gripping component (45) and the free end of the forearm (34), comprises a pneumatic or hydraulic jack (40) with a rod (42) driving a piston (88), moving in either direction of linear travel (F) between two pre-set upper and lower limiting positions,

the main arm (26) and the forearm (34) are mounted on the first loose spindle (64) by means of ball-bearings (66),

a second servo-motor (M2) drives the forearm (34) rotating about the first spindle (64),

a pair of first and second gear-wheels (68, 70) of the transmission device are fixed permanently at opposite ends of the loose spindle (64) of link (36), to cooperate with a pair of endless drive belts (76, 72) lying respectively in the direction of the forearm (34) and the main arm (26), the first belt (76) being wound on the first gear-wheel (68) of link (36) and a third gear-wheel (78) attached to the first means of vertical transfer and the second drive belt (72) co-operating with the second opposite gear-wheel (70) of said link (36) and a fourth gear-wheel (74) mounted coaxially on supporting spindle (28),

programming means co-operating with the servo-motors (M1, M2) in order to coordinate the two servo-controlled rotating motions of the main arm (26) and forearm (34), so as to drive the gripping component (45) through a linear trajectory at the beginning of the robot's operating cycle.

2. Industrial robot according to Claim 1, characterized by the fact that the four gear-wheels (78, 68, 70, 74) of the transmission device present outer diameters appreciably identical and the fourth gear-wheel (74) is either stationary, either adjustable in rotation with respect to the relative position of the rotating spindle (28) corresponding to main arm (26).

3. Industrial robot according to Claim 1 or 2, characterized by the fact that main arm (26) is longer than forearm (34), and that angular travel (B) of the second spindle (28) supporting arm (26) is greater than travel (C) of forearm (34) around spindle (64) of link (36), the kinematic system being so designed that the circular trajectory (T1) of swivel link (36) during the angular travel (B) of the main arm (26) lies inside the annular sector (38) swept by the arms of the kinematic, this sector (38) being delimited by two concentric circular arcs (T2, T3) having as center second spindle (28) and constituting the trajectories of the means of vertical transfer for the extremes values of the angular travel (C) of forearm (34).

4. Industrial robot according to any one of Claims 1 to 3, characterized by the fact that the second servo-motor (M2) causes the forearm to pivot (34) by means of a reducing gear mechanism (R3) composed of a ball-mounted drive screw (56) lying parallel to main arm (26) during the rotation of second spindle (28), the servo-motor (M2) being held by two supporting lugs (60, 62) fixed on second spindle (28).

5. Industrial robot according to any one of Claims 1 to 4, characterized by the fact that rod (42) of jack (40) is radially offset with respect to the axis of piston (88) so as to form an anti-rotation guide system.

6. Industrial robot according to Claim 5, characterized by the fact that rod (42) of the first jack (40) is coupled mechanically to a tool-holder (43) of the gripping component (45) and that a second jack (46) drives the vertical swing over of the gripping component (45) about a horizontal spindle (48) of tool-holder (43).

7. Industrial robot according to Claim 6, characterized by the fact that a releasable coupling system (100) with memory device, is provided for the tool-holder (43) in order to ensure the momentary disconnection of the tool (44) from the tool-holder (43) in the event of abnormal load and secondly to return the tool (44) to its start-of-work position.

8. Industrial robot according to Claim 7, characterized by the fact that the releasable coupling system (100) comprises :

a drive tube (102) one of the ends of which is designed as a socket joint (106a) co-operating with a first bolt (104a), while the other end serves as housing for a second socket joint (106b) corresponding to another bolt (104b), each bolt (104a, 104b) consisting of a locking ball or roller designed to fit into a cavity in the ball of the corresponding socket joint, so as to block the coupling system,

a drive rod (108) lying axially inside tube (102) between the two bolts (104a, 104b) so as to ensure locking of the second socket joint (106b) and unlocking of the first socket joint (106a), alternately.

9. Industrial robot according to any one of the preceding Claims 1 to 8, in which each servomotor (M1, M2) driving arms (26, 34) is governed by the sequential control system of the controller by means of an incremental coder of angular position (CP1, CP2) with a zero position index, and by means of an analog speed regulator (RV1, RV2) composing two control loops, one for position and one for speed and presenting the particular feature that the said control system of each servo-motor (M1, M2) comprises an on-off position detector (DP) placed in a predetermined location on the angular travel (B or C) of the corresponding arm (26, 34) and a system for the transitory readjustment of the said arm (26, 34) to a starting position when the first zero position signal is detected after the change of state of position detector (DP).

10. Industrial robot according to Claim 9, characterized by the fact that the system for transitory readjustment of each arm (26, 34) comprises means for handling inputs, means for detecting the status of the on-off position detector (DP) in order to localize the initial position of the arm, means to set the speed control loop of the controller at a given value, means to select the direction of rotation of the two-way servo-motor according to the status of the position detector during the rotation of the servo-motor, means to alter the set value of the speed control loop after the said change of state, means to determine the first zero position signal of the incremental coder delivered after the change of state of the detector for a given direction of rotation of the servo-motor, whatever the initial position of the arm, and means to reset the controller counter after the zero position signal has been detected.

**Patentansprüche**

1. Industrieroboter (10) ausgestattet mit einem beweglichen Manipulator (12) mit einem drehbaren Hauptarm (26), der mechanisch an einem mit dem Greiferorgan (45) verbundenen Vorderarm (34) gekuppelt ist, und von einem programmierbaren Automaten (14) gesteuert wird zur Steuerung des Arbeitszyklus des Roboters, wobei das kinematische System des Manipulators (12) aufweist :

eine Drehverbindung (36) des Hauptarmes (26) und des Vorderarmes (34) mit einer ersten senkrechten Achse (64), auf welcher der genannte Arm und Vorderarm montiert sind,

eine zweite senkrechte Achse (28) zum Tragen des Hauptarmes (26), die sich parallel zur ersten Achse (64) der Drehverbindung (36) erstreckt, so dass sich der Hauptarm (26) und der Vorderarm (34) sich drehbar um ihre jeweilige Achse (28, 64) bewegen, auf einer festen waagerechten Ebene, um ein kinematisches System zu bilden, das in Zylinder-Koordinaten arbeitet,

einen ersten Servomotor (M1) zum Antrieb des Hauptarmes,

eine Uebertragungsvorrichtung der Bewegung des Hauptarmes (26) und des Vorderarmes (34), versehen mit einem Rollen- und Antriebsriemen-System, das sich in Richtung des Hauptarmes erstreckt, wobei der genannte Roboter dadurch gekennzeichnet ist, dass :

ein erstes Senkrecht-Ueberleitungsmittel, das zwischen dem Greiferorgan (45) und dem freien Ende des Vorderarmes (34) angeordnet ist, eine hydraulische oder pneumatische Hebevorrichtung (40) besitzt, die einen Kolben (88) mit Steuerstange (42) aufweist, der von einer geradlinigen bidirektionalen Bewegung F zwischen zwei vorbestimmten Endlaufstellungen auf hohem Niveau und niedrigem Niveau verschoben wird,

der Hauptarm (26) und Vorderarm (34) auf der ersten freien Achse (64) mittels Lager (66) montiert sind,

ein zweiter Servomotor (M2) den Drehantrieb des Vorderarmes (34) um die erste Achse (64) gewaehrleistet,

ein Paar von ersten und zweiten Antriebsraedern (68, 70) der Uebertragungsvorrichtung dauerhaft mit den entgegengesetzten Enden der freien Achse (64) der Verbindung (36) verbunden sind, um mit einem Paar von ersten und zweiten endlosen Antriebsriemen (76, 72) zusammenzuarbeiten, die sich in der Richtung des Vorderarmes (34) bzw. des Hauptarmes (26) erstrecken, wobei der erste Antriebsriemen (76) auf dem ersten Antriebsrad (68) der Verbindung (36) und auf einem dritten, mit dem ersten senkrechten Uebertragungsmittel verbundenen Antriebsrad (78) aufgewickelt ist, und wobei der zweite Antriebsriemen (72) mit dem entgegengesetzten zweiten Antriebsrad (70) der genannten Verbindung (36) und einem vierten Antriebsrad (74), das koachsial zur zweiten Achse (28) montiert ist, zusammenarbeitet,

Programmiermittel des ersten und zweiten Servomotors (M1, M2) die beiden Bewegungen der geregelten Drehung des Hauptarmes (26) und des Vorderarmes (34) koordinieren, um das Greiferorgan (45) gemaess einer linearen Bahn zu Anfang des Arbeitszyklus des Roboters anzutreiben.

2. Industrieroboter gemaess Anspruch 1, dadurch gekennzeichnet, dass die vier Antriebsraeder (78, 68, 70, 74) der Uebertragungsvorrichtung identische Aussendurchmesser aufweisen, und dass das vierte Antriebsrad (74) entweder feststehend ist oder zur Drehung einstellbar ist mit Bezug auf die relative Stellung der zweiten drehbaren Achse (28), die mit dem Hauptarm (26) verbunden ist.

3. Industrieroboter gemaess Anspruch 1 oder 2, dadurch gekennzeichnet, dass die Laenge des Hauptarmes (26) groesser ist als die Laenge des Vorderarmes (34), und dass der Winkelhub (B) der zweiten Achse (28) des Hauptarmes (26) groesser ist als der Winkelhub (C) des Vorderarmes (34) um die Achse (64) der Verbindung (36), wobei das kinetische System so angeordnet ist, dass die Kreisbahn (T1) der Drehverbindung (36) bei dem Winkelhub (B) des Hauptarmes (26) im Innern des ringfoermigen Bereiches (38) zum Abtasten der Arme des kinematischen Systems gelegen ist, wobei der genannte Bereich (36) im ganzen Umkreis von zwei konzentrischen Kreisbogen (T2, T3) begrenzt wird, die auf der zweiten Achse (28) zentriert sind und die Bahnen des senkrechten Ueberleitungsmittels bilden fuer die extremen Werte des Winkelhubs (C) des Vorderarmes (34).

4. Industrieroboter gemaess einem der Ansprueche 1 bis 3, dadurch gekennzeichnet, dass der zweite Servomotor (M2) das Schwenken des Vorderarmes (34) gewaehrleistet mit Hilfe eines mechanischen Reduktionsgetriebes (R3), das von einer Kugeluebertragungsschraube (56) gebildet wird, und das sich parallel zu dem Hauptarm (26) bei der Drehung der zweiten Achse (28) erstreckt, wobei der Servomotor (M2) von wenigstens einem Befestigungseisen (60, 62) getragen wird, welches mit der zweiten Achse (28) verbunden ist.

5. Industrieroboter gemaess einem der Ansprueche 1 bis 4, dadurch gekennzeichnet, dass die Steuerstange (42) der Hebevorrichtung (40) radial in Bezug auf die Achse des Kolbens (88) dezentriert ist, so um eine Gegendrehung-Fuehrungsvorrichtung zu bilden.

6. Industrieroboter gemaess Anspruch 5, dadurch gekennzeichnet, dass die Steuerstange (42) der ersten Hebevorrichtung (40) mechanisch mit dem Werkzeughalter (43) des Greiferorganes (45) gekuppelt ist, und dass eine zweite Hebevorrichtung (46) das senkrechte Kippen des Greiferorganes (45) um eine waagerechte Achse (48) des Werkzeughalters (43) gewaehrleistet.

7. Industrieroboter gemaess Anspruch 6, dadurch gekennzeichnet, dass eine entkuppelbare Speicher-Verbindungsvorrichtung (100) mit dem Werkzeughalter (43) verbunden ist, um einerseits die zeitweise Trennung des Werkzeuges (44) von dem Werkzeughalter (43) bei Auftreten anormaler Spannungen zu bewirken, und um andererseits das Zurueckholen des Werkzeuges (44) in seine anfaengliche Arbeitsstellung zu bewirken.

8. Industrieroboter gemaess Anspruch 7, dadurch gekennzeichnet, dass die entkuppelbare Verbindungsvorrichtung (100) aufweist : eine Uebertragungsroehre (102), dessen eines Ende als Gelenklager (106a) ausgebildet ist, das mit einem ersten Riegel (104a) zusammenarbeitet, und dessen anderes Ende zur Unterbringung eines zweiten mit einem anderen Riegel (104b) verbundenen Gelenklagers (106b) dient, wobei jeder Riegel (104a, 104b) von einer Kugel oder Verriegelungswalze gebildet wird, die in der Blockierungsstellung der Vorrichtung in eine Aushoehlung des entsprechenden Gelenklagers eindringt, und eine Steuerstange (108), die sich achsial im Innern der Roehre (102) zwischen den beiden Riegeln (104a, 104b) erstreckt, um abwechselnd die Blockierung des zweiten Gelenklagers (106b) und das Entriegeln des ersten Gelenklagers (106a) zu gewaehrleisten.

9. Industrieroboter gemaess irgendeinem der vorhergehenden Ansprueche 1 bis 8, wobei jeder Servomotor (M1, M2) zum Antrieb der Arme (26, 34) von dem sequentiellen Steuersystem des Automaten gesteuert wird, dank eines Inkrement-Kodierers der Winkelstellung mit einem Nulldurchgangs-Index und dank eines Analog-Geschwindigkeitsreglers (RV1, RV2), der zwei Rueckfuehrschleifen in Lage und Geschwindigkeit bildet, dadurch gekennzeichnet, dass das genannte Steuersystem jedes Servomotors (M1 oder M2) einen Alles-oder-Nichts-Stellungsfuehler (DP) aufweist, der an einer vorbestimmten Stelle des Winkelhubs (B oder C) des Hauptarmes (26) und des Vorderarmes (34) gelegen ist, und eine Vorrichtung zur voruebergehenden Zurueckstellung des genannten Armes (26, 34) in eine Anfangsstellung bei Wahrnehmung des ersten Null-Index, der nach der Zustandsaenderung des Stellungsfuehlers (DP) gesehen wird.

10. Industrieroboter gemaess Anspruch 9, dadurch gekennzeichnet, dass die Vorrichtung zur voruebergehenden Zurueckstellung jedes Armes (26, 34) aufweist : Mittel zur Beruecksichtigung der Eingangssignale aufweist, ein Mittel, um den Zustand des Alles-oder-Nichts-Stellungsfuehlers (DP) zu detektieren zur Lokalisierung der urspruenglichen Stellung des Armes, Mittel, um im Geschwindigkeits-Regelkreis des Steuersystems des Automaten eine Vorschrift anzuzeigen, Mittel, um die Drehrichtung des bidirektionalen Servomotors gemaess dem Zustand des Fuehlers (DP) zu waehlen, Mittel, um eine Zustandsaenderung des Fuehlers beim Drehen des Servomotors zu detektieren, Mittel, um die Vorschrift des Geschwindigkeits-Regelkreises nach der genannten Zustandsaenderung zu aendern, Mittel, um den ersten Null-Index des Inkrement-Kodierers zu bestimmen, der nach der Zustandsaenderung des Fuehlers fuer eine bestimmte Drehrichtung des Servomotors unabhaengig von der urspruenglichen Stellung des Arms abgegeben wurde, und Mittel, um den Zaehler des Automaten nach Detektion des Null-Index voreinzustellen.

Fig.1

Fig. 2

Fig.3

Fig.4

Fig. 5

Fig.6

Fig.7

Fig.8

Fig.9

Fig. 10

**0 096 634**

Fig. 11

Codeurs

Puissance moteurs

Détecteurs de proximité

Commandes outils et vérins

Alarme

Cde outil

B = 270°

⊕ DP

⊕ DS

Fig. 12

130

⊕ DP

DS ⊕

132

C = 90°

Fig. 13

a) Signal détecteur de position DP

b) Signal index O du codeur

c) B = 270°

d) C = 90°

e) Cinématique du recalage suivant position du bras

Fig.14

Fig. 15